(19) Europäisches Patentamt
European Patent Office
Office européen des brevets

(11) **EP 4 768 428 A1**

(12) **EUROPEAN PATENT APPLICATION**
published in accordance with Art. 153(4) EPC

(43) Date of publication:
**01.07.2026 Bulletin 2026/27**

(21) Application number: **24856461.9**

(22) Date of filing: **20.08.2024**

(51) International Patent Classification (IPC):
**C01B 3/24** $^{(2006.01)}$      **B01J 3/08** $^{(2006.01)}$

(52) Cooperative Patent Classification (CPC):
**B01J 3/08; C01B 3/24**

(86) International application number:
**PCT/JP2024/029540**

(87) International publication number:
**WO 2025/041773 (27.02.2025 Gazette 2025/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **24.08.2023 JP 2023136570**

(71) Applicant: **NATIONAL UNIVERSITY CORPORATION TOKAI NATIONAL HIGHER EDUCATION AND RESEARCH SYSTEM Nagoya-shi, Aichi 464-8601 (JP)**

(72) Inventors:
• **ASAHARA, Makoto**
  **Gifu City, Gifu 5011193 (JP)**
• **MIYASAKA, Takeshi**
  **Gifu City, Gifu 5011193 (JP)**
• **ASATO, Katsuo**
  **Gifu City, Gifu 5011193 (JP)**
• **TOGASHI, Kenichi**
  **Gifu City, Gifu 5011193 (JP)**

(74) Representative: **Winter, Brandl - Partnerschaft mbB**
**Alois-Steinecker-Straße 22**
**85354 Freising (DE)**

(54) **HYDROGEN PRODUCTION DEVICE**

(57)      Provided is a technique capable of reducing the amount of carbon dioxide emissions during production of hydrogen. A hydrogen production apparatus includes a detonation-type combustion furnace that produces detonation with hydrogen and an oxidizing gas supplied, and a pyrolysis furnace that pyrolyzes a hydrocarbon supplied to produce hydrogen and carbon, in which one of the detonation-type combustion furnace and the pyrolysis furnace is formed in a cylindrical shape extending in a longitudinal direction, and is provided inside the other formed in a tubular shape extending in the longitudinal direction.

Fig.2

**Description**

[Technical Field]

The present disclosure relates to a hydrogen production apparatus. The present application is based on Japanese Patent Application No. 2023-136570 filed on August 24, 2023, the contents of which are incorporated herein by reference.

[Background Art]

To achieve carbon neutral, the use of hydrogen is expected. As a method of producing hydrogen, methane pyrolysis is sometimes used. As a hydrogen production method using methane pyrolysis ($CH_4 \rightarrow C + 2H_2$), pulse methane pyrolysis (PMP) is known (for example, Patent Literature 1). PMP is a method of heating methane by mixing combustion exhaust gas from intermittent methane deflagration and methane as a raw material.

[Citation List]

[Patent Literature]

[NPL 1] JP 2022-094918 A

[Summary of Invention]

[Technical Problem]

In PMP, carbon dioxide is emitted during production of hydrogen. Thus, there is room for further improvement in terms of reducing the amount of carbon dioxide emissions during production of hydrogen.

[Solution to Problem]

The present disclosure can be implemented in the following forms.

(1) According to a form of the present invention, a hydrogen production apparatus is provided. The hydrogen production apparatus includes a detonation-type combustion furnace that produces detonation with hydrogen and an oxidizing gas supplied, and a pyrolysis furnace that pyrolyzes a hydrocarbon supplied to produce hydrogen and carbon, in which one of the detonation-type combustion furnace and the pyrolysis furnace is formed in a cylindrical shape extending in a longitudinal direction, and is provided inside the other formed in a tubular shape extending in the longitudinal direction. The hydrogen production apparatus in this form produces hydrogen by heating and pyrolyzing the hydrocarbon by detonation or with combustion gas produced by detonation, and thus can reduce the amount of carbon dioxide emissions during production of hydrogen.
(2) In the hydrogen production apparatus according to (1), the hydrogen and the oxidizing gas may be supplied to the detonation-type combustion furnace from one end in the longitudinal direction, and the hydrocarbon may be supplied to the pyrolysis furnace from the opposite end in the longitudinal direction. The hydrogen production apparatus in this form can make the flowing direction of the hydrogen and the oxidizing gas opposite to the flowing direction of the hydrocarbon. As a result, the efficiency of heat exchange between the detonation-type combustion furnace and the pyrolysis furnace can be enhanced.
(3) In the hydrogen production apparatus according to (1) or (2), part of the hydrogen produced in the pyrolysis furnace may be supplied to the detonation-type combustion furnace. The hydrogen production apparatus in this form can eliminate the supply of hydrogen used as a fuel for detonation from the outside.
(4) In the hydrogen production apparatus according to any one of (1) to (3), the one of the detonation-type combustion furnace and the pyrolysis furnaces may be the detonation-type combustion furnace. According to the hydrogen production apparatus in this form, the high-temperature detonation-type combustion furnace is provided inside the pyrolysis furnace, so that heat loss can be prevented, and as a result, a decrease in hydrogen production efficiency can be prevented.
(5) In the hydrogen production apparatus according to any one of (1) to (4), the hydrocarbon may supplied to the pyrolysis furnace from vertically above, and the pyrolysis furnace may discharge the produced hydrogen and carbon from vertically below. The hydrogen production apparatus in this form allows produced solid carbon to be taken out from vertically below, and thus can prevent a decrease in the efficiency of recovery of carbon as a by-product.

Note that the present disclosure can be implemented in various forms, and can be implemented, for example, in forms such as a hydrogen production method, a hydrogen production system, a carbon production apparatus, a carbon production method, a carbon production system, a hydrogen and carbon production apparatus, a hydrogen and carbon production method, and a hydrogen and carbon production system.

[Brief Description of Drawings]

[Fig. 1] A schematic explanatory diagram illustrating a schematic configuration of a hydrogen production system.
[Fig. 2] An explanatory diagram schematically illustrating a configuration of a hydrogen production apparatus.
[Fig. 3] An explanatory diagram illustrating simulation results in an example.

[Description of Embodiments]

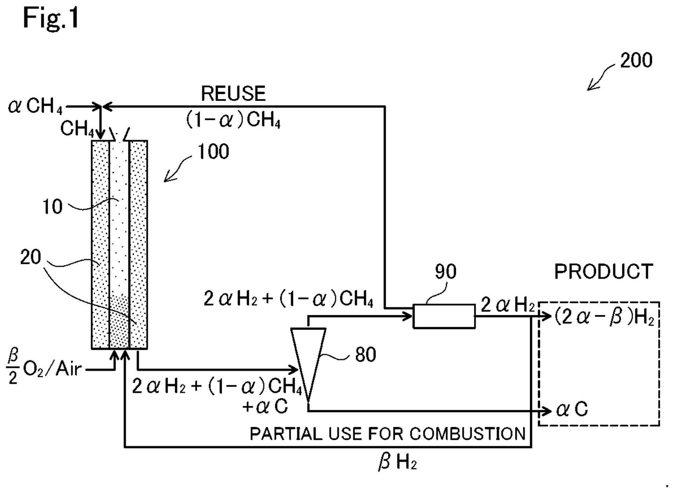

Fig. 1 is a schematic explanatory diagram illustrating a schematic configuration of a hydrogen production system 200 including a hydrogen production apparatus 100 as an embodiment of the present disclosure. The hydrogen production apparatus 100 (hereinafter, also referred to as the "apparatus 100") in the present disclosure produces hydrogen and carbon from a hydrocarbon by pyrolyzing the hydrocarbon. This pyrolysis is so-called methane pyrolysis. In methane pyrolysis, when the hydrocarbon is methane, an overall reaction represented by the following equation (1) occurs.

$$CH_4 \rightarrow C + 2H_2 \,... \qquad (1)$$

As shown in the above equation (1), hydrogen and carbon are produced in methane pyrolysis. Thus, in methane pyrolysis, carbon dioxide is not generated during production of hydrogen. Consequently, the apparatus 100 of the present embodiment can eliminate carbon dioxide emissions in the process of producing hydrogen, and thus can reduce the amount of carbon dioxide emissions. The hydrocarbon as a raw material is not particularly limited, and may be methane, ethane, propane, butane, pentane, or the like. Alternatively, a mixed gas containing methane as a main component and ethane, propane, butane, pentane, and the like, or a mixed gas containing any of ethane, propane, butane, pentane, or the like as a main component may be used. As the hydrocarbon as the raw material, natural gas containing methane as a main component is preferably used in terms of easy availability. As the natural gas, in addition to conventional natural gas, unconventional natural gas such as shale gas, tight gas, coalbed methane, and methane hydrate may be used.

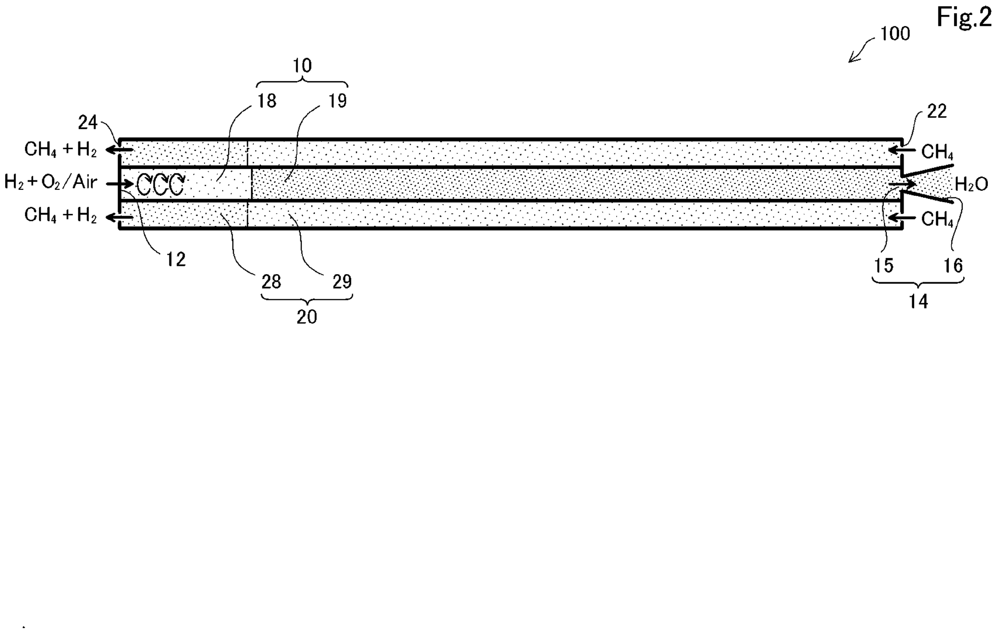

Fig. 2 is an explanatory diagram schematically illustrating a configuration of the hydrogen production apparatus 100. The apparatus 100 of the present disclosure includes a detonation-type combustion furnace 10 and a pyrolysis furnace 20. In the present embodiment, the detonation-type combustion furnace 10 is formed in a cylindrical shape extending in a longitudinal direction, and the pyrolysis furnace 20 is formed in a tubular shape extending in the longitudinal direction. The detonation-type combustion furnace 10 is provided inside the pyrolysis furnace 20. In other words, the detonation-type combustion furnace 10 is inserted into the radially inside of the pyrolysis furnace 20. Thus, the detonation-type combustion furnace 10 and the pyrolysis furnace 20 are disposed substantially concentrically. The cross-sectional shapes of the detonation-type combustion furnace 10 and the pyrolysis furnace 20 are not limited to substantially circular shapes, and may be polygonal shapes such as polygons close to a circle.

The detonation-type combustion furnace 10 produces detonation in the interior thereof, using hydrogen and an oxidizing gas supplied. In the present description, "detonation" means a phenomenon in which a shock wave and a combustion wave generated during combustion propagate together at supersonic speed. The oxidizing gas is not particularly limited, and may be, for example, oxygen or air containing oxygen. Hydrogen as a fuel to be supplied to the detonation-type combustion furnace 10 may be a mixed gas of hydrogen and a hydrocarbon. The detonation-type combustion furnace 10 is provided with a first supply portion 12 and a first discharge portion 14.

The first supply portion 12 is provided at one longitudinal end of the detonation-type combustion furnace 10. Hydrogen and the oxidizing gas are supplied from the first supply portion 12 into the detonation-type combustion furnace 10. In the present embodiment, the first supply portion 12 corresponds to a plurality of through holes formed in a longitudinal end face of the detonation-type combustion furnace 10. The through holes are preferably arranged at substantially equal intervals along a circumferential direction in the end face of the detonation-type combustion furnace 10, but may be arranged at desired intervals. Alternatively, the first supply portion 12 may be a single through hole.

To the detonation-type combustion furnace 10 of the present embodiment, a pre-detonator (not illustrated) is provided at a position near the first supply portion 12. The pre-detonator is formed with a diameter smaller than that of the detonation-type combustion furnace 10, and injects a detonation wave created by causing a mixture of hydrogen and an oxidizing gas to explode into the detonation-type combustion furnace 10. The pre-detonator facilitates the creation and propagation of a detonation wave in the detonation-type combustion furnace 10. The oxidizing gas used in the pre-detonator is preferably oxygen in terms of enhancing detonation production efficiency. The pre-detonator may be omitted. A detonation wave may be formed by an ignition source with intense energy such as an electric spark. Detonation may be initiated by a transition from a deflagration wave to a detonation wave.

The first discharge portion 14 is provided at the opposite longitudinal end of the detonation-type combustion furnace 10. Water vapor produced by combustion is discharged from the first discharge portion 14. In the present embodiment, the first discharge portion 14 is formed at a longitudinal end portion of the detonation-type combustion furnace 10. In the present embodiment, the first discharge portion 14 includes a reduced-diameter portion 15 and a tapered portion 16. The reduced-diameter portion 15 is continuous with the detonation-type combustion furnace 10, and is formed with a diameter smaller than the diameter of the detonation-type combustion furnace 10. The inclusion of the reduced-diameter portion 15 allows a reduction in the rate of discharge of high-temperature water vapor discharged from the detonation-type combustion furnace 10. The tapered portion 16 is continuous with the reduced-diameter portion 15 and is formed in a tapered shape with a diameter increasing in a direction away from the detonation-type combustion furnace 10. At least one of the reduced-diameter portion 15 and the tapered portion 16 may be omitted. That is, the diameter of the first discharge portion 14 may be substantially constant, or may be substantially the same as the diameter of the detonation-type combustion furnace 10, or may be smaller or larger than the diameter of the detonation-type combustion furnace 10.

As indicated by thin arrows in Fig. 2, in the detonation-type combustion furnace 10 of the present embodiment, rotating detonation occurs in a region relatively close to the first supply portion 12 in the longitudinal direction. In the following description, for the sake of convenience, a region where detonation is occurring in the detonation-type combustion furnace 10 is also referred to as a "detonation region 18", and the other region is referred to as a "combustion gas region 19". In the case where the supplied fuel is hydrogen and the oxidizing gas is oxygen, the temperature of the detonation region 18 is expected to be about 3000°C to 3500°C. In the case where the supplied fuel is hydrogen and the oxidizing gas is air, the temperature of the detonation region 18 is expected to be about 2000°C to 2500°C. The temperature inside the detonation-type combustion furnace 10 decreases from the detonation region 18 toward the first discharge portion 14 in the longitudinal direction, that is, with increasing distance from the detonation region 18, due to heat exchange with the pyrolysis furnace 20.

The pyrolysis furnace 20 has a cylindrical appearance shape surrounding the detonation-type combustion furnace 10. The pyrolysis furnace 20 pyrolyzes at least part of the supplied hydrocarbon with the heat of the detonation-type combustion furnace 10, producing hydrogen and carbon. The pyrolysis furnace 20 is provided with a second supply portion 22 and a second discharge portion 24.

The second supply portion 22 is provided at the opposite longitudinal end of the pyrolysis furnace 20. In other words, the second supply portion 22 is provided on the side on which the first discharge portion 14 of the detonation-type combustion furnace 10 is formed in the longitudinal direction of the apparatus 100. The hydrocarbon as the raw material is supplied from the second supply portion 22 into the pyrolysis furnace 20. In the present embodiment, the second supply portion 22 corresponds to a plurality of through holes formed in a longitudinal end face of the pyrolysis furnace 20. The through holes are preferably arranged at substantially equal intervals along a circumferential direction in the end face of the pyrolysis furnace 20, but may be arranged at desired intervals. Alternatively, the second supply portion 22 may be a single through hole.

The second discharge portion 24 is provided at one longitudinal end of the pyrolysis furnace 20. In other words, the second discharge portion 24 is provided on the side on which the first supply portion 12 of the detonation-type combustion furnace 10 is formed in the longitudinal direction of the apparatus 100. Hydrogen and carbon produced by pyrolysis and the hydrocarbon left without being pyrolyzed are discharged from the second discharge portion 24. In the present embodiment, the second discharge portion 24 corresponds to a plurality of through holes formed in a longitudinal end face of the pyrolysis furnace 20. The through holes are preferably arranged at substantially equal intervals along a circumferential direction in the end face of the pyrolysis furnace 20, but may be arranged at desired intervals. Alternatively, the second discharge portion 24 may be a single through hole.

The internal temperature of the pyrolysis furnace 20 is increased by heat exchange with the detonation-type combustion furnace 10. The hydrocarbon with a relatively low temperature supplied from the second supply portion 22 is preheated by heat exchange with the combustion gas region 19. When the hydrocarbon reaches a region around the detonation region 18, the hydrocarbon reaches a still higher temperature and is pyrolyzed. In the following description, for the sake of convenience, a region in which the hydrocarbon reaches a temperature at which the pyrolysis of the hydrocarbon occurs in the pyrolysis furnace 20 is also referred to as a "pyrolysis region 28", and the other region is also referred to as a "preheating region 29". In the preheating region 29, the temperature gradually increases from the second supply portion 22 toward the pyrolysis region 28 in the longitudinal direction, and the hydrocarbon is preheated. The temperature of the pyrolysis region 28 is expected to be about 900°C to 1700°C. The temperature of the pyrolysis region 28 is preferably 1000°C or higher, more preferably 1100°C or higher, and still more preferably 1200°C or higher in terms of improving the hydrogen yield. In the longitudinal direction of the apparatus 100, the boundary position between the pyrolysis region 28 and the preheating region 29 may not coincide with the boundary position between the detonation region 18 and the combustion gas region 19. The apparatus 100 of the present disclosure is formed of alumina, but is not limited to a ceramic-based material such as alumina, and may be formed of any material having heat resistance, such as silicon carbide.

The apparatus 100 of the present disclosure produces hydrogen by pyrolyzing a hydrocarbon with high-temperature detonation, and thus is expected not to substantially generate carbon dioxide. As a result, the amount of carbon dioxide emissions during production of hydrogen can be reduced. Further, the apparatus 100 of the present disclosure pyrolyzes a hydrocarbon at a high temperature by detonation, and thus can eliminate the use of a catalyst for the pyrolysis of the hydrocarbon. As a result, it is possible to prevent catalyst-derived components from being contained in carbon produced as a by-product, so that carbon of high purity can be produced. According to the apparatus 100 of the present disclosure, the detonation-type combustion furnace 10 is separated from the pyrolysis furnace 20. This can eliminate the separation of hydrogen from a mixed gas containing a plurality of components, as compared with an apparatus using a method in which produced hydrogen and combustion exhaust gases (such as carbon dioxide, nitrogen, oxygen, and water) are mixed and discharged, such as pulse methane pyrolysis (PMP).

In the present embodiment, as described above, hydrogen and the oxidizing gas are supplied to the detonation-type combustion furnace 10 from the first supply portion 12 provided at one end in the longitudinal direction, and the hydrocarbon is supplied to the pyrolysis furnace 20 from the second supply portion 22 provided at the opposite end in the longitudinal direction. Thus, in the apparatus 100 of the present embodiment, the flowing direction of hydrogen and the oxidizing gas is opposite to the flowing direction of the hydrocarbon. This can increase the efficiency of heat exchange, and thus can prevent a decrease in hydrogen production efficiency. Further, in the apparatus 100 of the present embodiment, the high-temperature detonation-type combustion furnace 10 is provided inside the pyrolysis furnace 20, so that heat loss can be prevented, and as a result, a decrease in hydrogen production efficiency can be prevented. Furthermore, the detonation-type combustion furnace 10 in the apparatus 100 of the present embodiment uses so-called rotating detonation, and thus can eliminate a step of purging the interior of the combustion furnace with nitrogen or the like after detonation occurs.

As illustrated in Fig. 1, the hydrogen production system 200 (hereinafter also referred to as the "system 200") in the present embodiment includes a carbon separation apparatus 80 and a hydrogen separation apparatus 90 in addition to the hydrogen production apparatus 100. The carbon separation apparatus 80 is provided downstream of the second discharge portion 24 of the pyrolysis furnace 20. The carbon separation apparatus 80 separates carbon from hydrogen, carbon, and the hydrocarbon discharged from the second discharge portion 24. A specific configuration of the carbon separation apparatus 80 is not particularly limited, and may include, for example, a filter to trap carbon, such as a dust collection filter. A mixed gas of the hydrogen and the hydrocarbon separated by the carbon separation apparatus 80 is supplied to the hydrogen separation apparatus 90. The hydrogen separation apparatus 90 separates the mixed gas of the hydrogen and the hydrocarbon into the hydrogen and the hydrocarbon. A specific configuration of the hydrogen separation apparatus 90 is not particularly limited, and may include, for example, a mesh-shaped member with openings formed to allow only hydrogen molecules to pass therethrough.

In the system 200 of the present embodiment, the following equations (2) to (4) are established. In the equations and in Fig. 1, $\alpha$ represents the methane conversion rate, and $\beta$ represents the hydrogen combustion usage amount.

$$CH_4 \rightarrow 2\alpha H_2 + (1-\alpha)CH_4 + \alpha C \ ... \qquad (2)$$

$$\beta H_2 + \beta/2 \times O_2 \rightarrow \beta H_2O \ ... \qquad (3)$$

$$2\alpha - \beta > 0 \ ... \qquad (4)$$

Here, the reaction heat of the above equation (2) is $-74.8 \times \alpha$ [kJ/mol$_{CH4}$], and the reaction heat of the above equation (3) is $241.8 \times \beta$ [kJ/mol$_{H2}$]. Thus, if all the combustion heat of detonation is used for pyrolysis, the system 200 is established with $\beta \geq 0.3\alpha$. Consequently, under ideal conditions, 1.7 mol of $H_2$ is produced from 1 mol of $CH_4$.

In the present embodiment, the hydrogen separated in the hydrogen separation apparatus 90 is supplied to the detonation-type combustion furnace 10. That is, in the present embodiment, part of the hydrogen produced in the pyrolysis furnace 20 is supplied to the detonation-type combustion furnace 10. This configuration can eliminate the supply of hydrogen used as a fuel for detonation from the outside, and allows the system 200 to be self-contained. In addition to the hydrogen produced in the pyrolysis furnace 20, if a mixed gas of the hydrocarbon left without being decomposed and the produced hydrogen is discharged from the pyrolysis furnace 20, the mixed gas of the hydrogen and the hydrocarbon may be supplied to the detonation-type combustion furnace 10. In the present embodiment, the hydrocarbon separated in the hydrogen separation apparatus 90 is supplied to the pyrolysis furnace 20. This configuration allows the hydrocarbon left without being pyrolyzed to be reused, and thus prevents a decrease in hydrogen production efficiency. In the present embodiment, the apparatus 100 is disposed such that its longitudinal direction is substantially along the vertical direction.

Consequently, the hydrocarbon is supplied to the pyrolysis furnace 20 from vertically above, and the pyrolysis furnace 20 discharges produced hydrogen and carbon from vertically below. This configuration allows solid carbon to be taken out from vertically below, and thus can prevent a decrease in the efficiency of recovery of carbon as a by-product.

B. Other Embodiments:

In the hydrogen production apparatus 100 in the above embodiment, the detonation-type combustion furnace 10 is provided inside the pyrolysis furnace 20. However, one of the detonation-type combustion furnace 10 and the pyrolysis furnace 20 may be formed in a cylindrical shape extending in the longitudinal direction, and provided inside the other formed in a tubular shape extending in the longitudinal direction. Thus, the pyrolysis furnace 20 formed in a cylindrical shape may be provided inside the detonation-type combustion furnace 10 formed in a tubular shape. In other words, the hydrogen production apparatus 100 may be in a form in which the cylindrical pyrolysis furnace 20 is inserted radially inside the tubular detonation-type combustion furnace 10.

In the hydrogen production apparatus 100 of the above embodiment, hydrogen and the oxidizing gas are supplied to the detonation-type combustion furnace 10 from one end in the longitudinal direction, and the hydrocarbon is supplied to the pyrolysis furnace 20 from the opposite end, but the present disclosure is not limited thereto. The hydrogen production apparatus 100 may be in a form in which hydrogen and the oxidizing gas are supplied to the detonation-type combustion furnace 10, and the hydrocarbon is supplied to the pyrolysis furnace 20, both from one end in the longitudinal direction. This form allows the detonation region 18 that has reached an excessively high temperature to be cooled by the hydrocarbon supplied at a relatively low temperature.

The hydrogen production apparatus 100 in the above embodiment is assumed to use so-called rotating detonation, but may use so-called pulse detonation. In pulse detonation, hydrogen and an oxidizing gas are intermittently supplied to the detonation-type combustion furnace, so that a decrease in energy efficiency can be prevented. When high-temperature water vapor produced by combustion is discharged, pulse detonation allows the water vapor to be discharged after its temperature is relatively lowered.

The hydrogen production apparatus 100 in the above embodiment is merely an example, and various modifications can be made. To prevent the temperature around the detonation-type combustion furnace 10 from becoming excessively high, a solvent such as water may be circulated around the detonation-type combustion furnace 10 to remove heat, thereby lowering the temperature. By boiling such a solvent, the temperature of the hydrocarbon to be supplied may be raised in advance at the second supply portion 22 of the pyrolysis furnace 20. Such a configuration is applicable to both the form in which the pyrolysis furnace 20 is provided inside the detonation-type combustion furnace 10 and the form in which the detonation-type combustion furnace 10 is provided inside the pyrolysis furnace 20.

[Example]

Hereinafter, the present invention will be described more specifically with an example, but the present invention is not limited to the following example.

A simulation of temperature distributions in a hydrogen production apparatus was performed. Methane was used as a hydrocarbon, and air was used as an oxidizing gas. The temperature and pressure behind detonation were calculated based on the Chapman-Jouguet (CJ) theory that is a one-dimensional detonation theory. The CJ temperature, the CJ pressure, and the gas composition were calculated using the WEB version of NASA CEA (https://cearun.grc.nasa.gov/). Temperature distributions were obtained by an original simulation solver created in Python, using the CJ temperature, the CJ pressure, and the gas composition obtained by the calculation as inflow conditions.

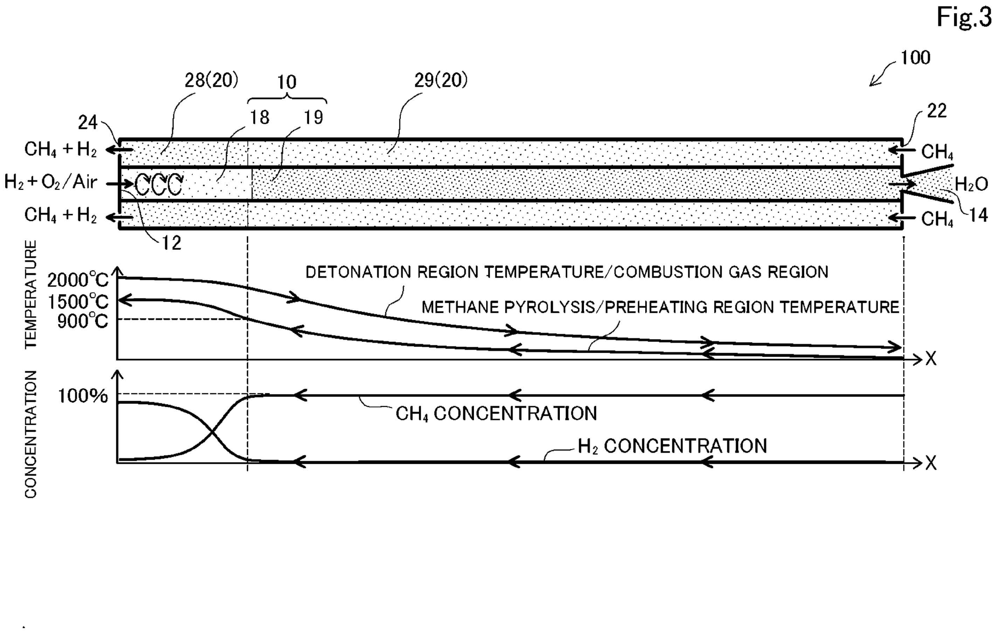

Fig. 3 is an explanatory diagram illustrating simulation results in the example. Fig. 3 illustrates a schematic cross-sectional view of the hydrogen production apparatus 100 and temperature distributions and gas concentration distributions in the longitudinal direction with their positions corresponding to each other. In Fig. 3, the first supply portion 12 of the detonation-type combustion furnace 10 and the second discharge portion 24 of the pyrolysis furnace 20 are illustrated on the left side of the sheet, and the second supply portion 22 of the pyrolysis furnace 20 and the first discharge portion 14 of the detonation-type combustion furnace 10 are illustrated on the right side of the sheet. That is, in the detonation-type combustion furnace 10, the gas flows from the left side to the right side of the sheet, and in the pyrolysis furnace 20, the gas flows from the right side to the left side of the sheet. In the temperature distributions and the gas concentration distributions, for the sake of convenience, the flowing directions of the gases are indicated by arrows in the curves.

The results illustrated in Fig. 3 indicate the following. The hydrogen and the oxidizing gas supplied from the first supply portion 12 illustrated on the left side of the sheet into the detonation-type combustion furnace 10 formed a detonation wave and reached a high temperature of 2000°C or higher. In the detonation-type combustion furnace 10, the temperature gradually decreased from the first supply portion 12 toward the first discharge portion 14 due to heat exchange with the hydrocarbon in the pyrolysis furnace 20. The hydrogen concentration was reduced by combustion, and the hydrogen concentration became approximately 0% in the combustion gas region 19. The temperature of the hydrocarbon supplied at room temperature from the second supply portion 22 illustrated on the right side of the sheet into the pyrolysis furnace 20 gradually increased from the second supply portion 22 toward the second discharge portion 24 due to heat exchange with the detonation-type combustion furnace 10. The concentration of the hydrocarbon in the preheating region 29 was approximately 100%. The hydrocarbon that had reached a temperature at which pyrolysis occurs was pyrolyzed, whereby the hydrocarbon concentration decreased.

The present disclosure is not limited to the above-described embodiments, and can be implemented by various configurations without departing from the gist thereof. For example, the technical features in the embodiments corresponding to the technical features in the forms described in the Summary of Invention section can be appropriately replaced or combined in order to solve part or all of the above-described problems or achieve part or all of the above-described effects. If the technical features are not described as essential in the present description, they can be deleted as appropriate.

[Reference Signs List]

10 ... detonation-type combustion furnace; 12 ... first supply portion; 14 ... first discharge portion; 15 ... reduced-diameter portion; 16 ... tapered portion; 18 ... detonation region; 19 ... combustion gas region; 20 ... pyrolysis furnace; 22 ... second supply portion; 24 ... second discharge portion; 28 ... pyrolysis region; 29 ... preheating region; 80 ... carbon separation apparatus; 90 ... hydrogen separation apparatus; 100 ... hydrogen production apparatus; 200 ... hydrogen production system

**Claims**

1.  A hydrogen production apparatus comprising:

    a detonation-type combustion furnace configured to produce detonation with hydrogen and an oxidizing gas supplied; and
    a pyrolysis furnace configured to pyrolyze a hydrocarbon supplied to produce hydrogen and carbon, wherein one of the detonation-type combustion furnace and the pyrolysis furnace is formed in a cylindrical shape extending in a longitudinal direction, and is provided inside the other of the detonation-type combustion furnace and the pyrolysis furnace formed in a tubular shape extending in the longitudinal direction.

2.  The hydrogen production apparatus according to claim 1, wherein

    the hydrogen and the oxidizing gas are supplied to the detonation-type combustion furnace from one end in the longitudinal direction, and
    the hydrocarbon is supplied to the pyrolysis furnace from an opposite end in the longitudinal direction.

3.  The hydrogen production apparatus according to claim 1 or 2, wherein
    part of the hydrogen produced in the pyrolysis furnace is supplied to the detonation-type combustion furnace.

4.  The hydrogen production apparatus according to claim 1 or 2, wherein
    the one of the detonation-type combustion furnace and the pyrolysis furnace is the detonation-type combustion furnace.

5.  The hydrogen production apparatus according to claim 1 or 2, wherein

    the hydrocarbon is supplied to the pyrolysis furnace from vertically above, and
    the pyrolysis furnace discharges the produced hydrogen and carbon from vertically below.

## Fig.1

Fig.2

Fig.3

EP 4 768 428 A1

## INTERNATIONAL SEARCH REPORT

| International application No. |
|---|
| **PCT/JP2024/029540** |

**A. CLASSIFICATION OF SUBJECT MATTER**

*C01B 3/24*(2006.01)i; *B01J 3/08*(2006.01)i
FI:   C01B3/24; B01J3/08 Z

According to International Patent Classification (IPC) or to both national classification and IPC

**B. FIELDS SEARCHED**

Minimum documentation searched (classification system followed by classification symbols)

C01B3/00-3/58; B01J3/08

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII); JSTChina (JDreamIII)

**C. DOCUMENTS CONSIDERED TO BE RELEVANT**

| Category* | Citation of document, with indication, where appropriate, of the relevant passages | Relevant to claim No. |
|---|---|---|
| A | US 2004/0166055 A1 (STICKNEY, Michael. J.) 26 August 2004 (2004-08-26) entire text | 1-5 |
| A | JP 2005-255494 A (TOHO GAS CO., LTD.) 22 September 2005 (2005-09-22) entire text | 1-5 |
| A | WO 2023/136358 A1 (MITSUBISHI CHEMICAL CORPORATION) 20 July 2023 (2023-07-20) entire text | 1-5 |
| A | JP 2006-111469 A (JFE ENGINEERING CORPORATION) 27 April 2006 (2006-04-27) entire text | 1-5 |
| A | JP 2007-254208 A (TOKYO INSTITUTE OF TECHNOLOGY) 04 October 2007 (2007-10-04) entire text | 1-5 |

☐ Further documents are listed in the continuation of Box C.   ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **16 October 2024** | **29 October 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

# EP 4 768 428 A1

| INTERNATIONAL SEARCH REPORT<br>Information on patent family members | | International application No.<br>**PCT/JP2024/029540** |
|---|---|---|

| Patent document<br>cited in search report | Publication date<br>(day/month/year) | Patent family member(s) | Publication date<br>(day/month/year) |
|---|---|---|---|
| US 2004/0166055 A1 | 26 August 2004 | (Family: none) | |
| JP 2005-255494 A | 22 September 2005 | (Family: none) | |
| WO 2023/136358 A1 | 20 July 2023 | (Family: none) | |
| JP 2006-111469 A | 27 April 2006 | (Family: none) | |
| JP 2007-254208 A | 04 October 2007 | (Family: none) | |

Form PCT/ISA/210 (patent family annex) (July 2022)

12

**EP 4 768 428 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023136570 A

- JP 2022094918 A